# EUROPEAN PATENT APPLICATION

(11) **EP 3 683 027 A1**
(43) Date of publication of application: **22.07.2020**
(21) Application number: 19382040.4
(22) Date of filing: 21.01.2019
(51) Int. Cl.: B29C 33/38, B23P 15/24, B33Y 80/00, B29L 31/30

(54) **METHOD FOR MANUFACTURING TOOLING**

(71) Applicant: Airbus Operations, S.L.U., 28906 Getafe (Madrid) (ES)
(72) Inventor: MUÑOZ LOPEZ, Maria, Pilar, 28906 GETAFE (Madrid) (ES); PINILLOS MARTINEZ, Ricardo, 28906 GETAFE (Madrid) (ES); DIESTE MARCIAL, Jose, Antonio, 28906 GETAFE (Madrid) (ES); LAGUIA PEREZ, Alberto, 28906 GETAFE (Madrid) (ES); MONZON CATALAN, Iván, 28906 GETAFE (Madrid) (ES)
(74) Representative: Herrero & Asociados, S.L.

(57) **Abstract**

The method for manufacturing tooling comprises the steps of forming a shape (1); forming a metallic plate (2) over said shape (1); forming a structure (3) over said metallic plate (2); and removing material from the metallic plate (2) for obtaining the final tooling.

The method permits material saving, as less scrap is produced, and more flexibility in tooling design and manufacturing, and fast reactions to late design modifications.

## Description

The present invention refers to a method for manufacturing tooling, in particular for manufacturing tooling that are used in aircrafts composites parts, by a hybrid approach based on the combination of additive and subtractive techniques.

### Background of the invention

Tooling industry for curing composites parts remain stagnated since the last 30 years and technologies used for large metallic tool manufacturing are pure subtractive. These tools are very heavy (some of them around 30-32 tons) and difficult to handle.

The structure of lay-up and curing moulds comprises basically a plate and a heavy sub-structure that provides the structural reinforcement.

The plate copies part geometry to be manufactured and usually has a thickness of around 8-15 mm depending on the application.

The plate is milled in order to have a good superficial quality and geometrical tight tolerances and it is anchored to the structure based on frames (longitudinal and transversal oriented) that makes the tool stiff and prevents instability and huge deformations.

These frames are usually laser cut from a solid plate of a metallic material (aluminium, steel, invar, etc.) and welded together to achieve the desired geometry, so most of it is scrap (around 70-80%). Normally, these frames form an "egg-crate" shape structure with a step length fixed.

Curing tools manufactured by this technology have inefficient behaviour inside an autoclave, as they are highly massive, and it takes a really long time to heat them up. Thus, curing cycles to manufacture composite parts are very time-consuming and heating is quite inhomogeneous, having gradients among the part of around 30-35°C.

Added to all these factors, delivery lead times of tooling are very long and make necessary to have an early design of the tool, being very difficult to make design modifications. Tooling repair is also quite expensive.

Therefore, the aim of the present invention is to develop additive layer manufacturing techniques to generate large tools with complex and optimized arquitectures that provide higher performance compared with tooling manufactured with conventional cutting, welding and milling operations.

The aim of the present invention is also to solve weight issues and subsequently, inhomogeneous heating during manufacturing of parts. The combination of additive and subtractive technologies makes possible to have more flexibility in the design of the tool, as it is easier to make modifications. New complex architectures can be manufactured by material addition so high scrap volume issue is solved.

### Description of the invention

With the method according to the present invention it is possible to solve said drawbacks, providing other advantages that are described below.

The method for manufacturing tooling according to the present invention comprises the steps of:
- forming a shape;
- forming a metallic plate over said shape;
- forming a structure over said metallic plate; and
- removing material from the metallic plate for obtaining the final tooling.

Preferably, the forming of the shape is made by additive layer manufacturing. Furthermore, said shape is made from a resin or other cheap material that supports requirements of deposition the material objective on it, such as, e.g. polyurethane resin.

Also preferably, the metallic plate is formed by spraying a metallic coating over the shape, and, according to a preferred embodiment, said spraying is carried out applying an electric arc between metal wires, so that the metal melts, and afterwards the metal is solidified blowing air. Other techniques of deposition, that provides a homogeneous material layer deposition with low thermal effect, could be used as alternative.

Furthermore, the structure is preferably formed by wire-arc additive manufacturing.

According to two alternative embodiments, the material removed from the metallic plate is carried out by milling or mechanizing the metallic plate.

Preferably, the method according to the present invention can also comprise a simulation step before forming the structure, wherein the simulation step can comprise the simulation of a thermal and deposition strategy.

Furthermore, the method can also comprise a step of releasing thermal stresses in the structure after the step of forming the structure and after the step of milling.

As stated previously, the aim of the present invention is to provide a method for manufacturing large tooling with complex and optimized architectures that provide higher performance compared with those tooling manufactured with conventional cutting, welding and milling operations.

Furthermore, the present invention also solves weight issues and inhomogeneous heating during manufacturing of parts. The combination of additive and subtractive technologies makes possible to have more flexibility in the design of the tooling, as it is easier to make modifications. New complex architectures can be manufactured by material addition so high scrap volume issue is solved.

At least the present invention provides the following advantages:
- Material saving, as less scrap is produced.
- More flexibility in tooling design and manufacturing, and fast reactions to late design modifications.
- Raw material delivered in one specific format for multiple applications.
- Shorter lead times in tooling manufacturing, due to high deposition rates.
- More complex geometries are allowed, because there is no restriction in any degree of freedom during deposition.
- High integration of parts, less assembly elements.
- Better thermal behaviour.

### Brief description of the drawings

For a better understanding the above explanation and for the sole purpose of providing an example, some non-limiting drawings are included that schematically depict a practical embodiment.

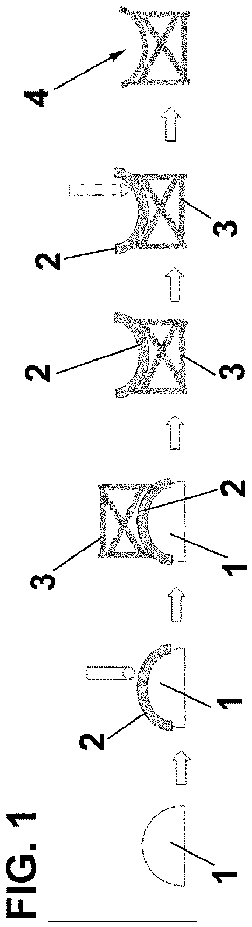

Figure 1 is a diagrammatical drawing of the steps of the method according to the present invention.

### Description of a preferred embodiment

The present invention refers to a method for manufacturing large tooling combining conventional subtractive techniques with additive technologies ALM (Additive Layer Manufacturing) based on WAAM (Wire-Arc Additive Manufacturing).

This WAAM technique consists of the combination of a metallic material in wire format and an electric arc as heat source.

Other metallic deposition techniques could be used to brow the metallic plate, like laser cladding, metal spraying, electro beam, etc.

The hybrid approach to manufacture tooling combines the use of addition and subtraction technologies.

An example of tooling that is manufactured with the method according to the present invention is tooling that is used in aircrafts with carbon fiber reinforced polymer (CFRP) components.

According to a non-limitative preferred embodiment, the manufacturing method of the present invention comprises the following steps:
Firstly, a resin, such as a polyurethane resin, is used to form a shape of the tooling. The material of the shape is deposited by additive manufacturing technology, such as Additive Layer Manufacturing (ALM).

Then a metallic coating is formed, e.g. by spraying, over the surface of the shape to form the plate of the tooling. This technique is similar to wire arc welding and consists of two raw metal wires that are ducted to an application gun and an electric arc is produced between both of them to make the material melt.

Then, a pressure air force is forced to blow out the metal melted and drops it against the shape surface. Melted material deposited cools down and solidifies again, generating the metallic coating.

A solid plate of more than 20 mm can be deposited suitable for machining or milling in the last step of the process and to achieve a good surface finish and good geometric tolerances, as will be described hereinafter.

A thermal and deposition strategy simulation is preferably performed to minimize thermal deformation during layers deposition.

Then, a structure of the tooling is formed, e.g. by Wire-Arch Additive Manufacturing (WAAM), on said metallic plate. Cords of metallic material are deposited, with certain strategy, to form the structure, being able to build complex geometries.

Before the final milling is necessary a step to release thermal stresses in the structure.

Finally, the metallic plate is milled or mechanized to achieve the superficial quality and tolerances required for the manufacturing.

Even though reference has been made to a specific embodiment of the invention, it is obvious for a person skilled in the art that the method described herein is susceptible to numerous variations and modifications, and that all of the details mentioned can be substituted for other technically equivalent ones without departing from the scope of protection defined by the attached claims.

## Claims

1. Method for manufacturing tooling, **characterized in that** comprises the steps of:
- forming a shape (1);
- forming a metallic plate (2) over said shape (1);
- forming a structure (3) over said metallic plate (2); and
- removing material from the metallic plate (2) for obtaining the final tooling.

2. Method according to claim 1, wherein the forming of the shape (1) is made by additive layer manufacturing.

3. Method according to claim 1 or 2, wherein said shape (1) is made from a resin.

4. Method according to claim 3, wherein said resin is a polyurethane resin.

5. Method according to any of the preceding claims, wherein the metallic plate (2) is formed by spraying a metallic coating over the shape (1).

6. Method according to claim 5, wherein said spraying is carried out applying an electric arc between metal wires, so that the metal melts, and afterwards the metal is solidified blowing air.

7. Method according to any of the preceding claims, wherein the structure (3) is formed by wire-arc additive manufacturing.

8. Method according to any of the preceding claims, wherein the material removed from the metallic plate (2) is carried out by milling or mechanizing the metallic plate (2).

9. Method according to any of the preceding claims, wherein the method also comprises a simulation step before forming the structure (3).

10. Method according to claim 9, wherein the simulation step comprises the simulation of a thermal and deposition strategy.

11. Method according to any of the preceding claims, wherein the method also comprises a step of releasing thermal stresses in the structure (3) after the step of forming the structure (3).
